# EUROPÄISCHE PATENTANMELDUNG

(11) **EP 0 908 220 A1**
(43) Veröffentlichungstag der Anmeldung: **14.04.1999**
(21) Anmeldenummer: 97116105.4
(22) Anmeldetag: 16.09.1997
(51) Int. Cl.: B01D 53/70, B01D 53/86, B01D 53/02

(54) **Verfahren zur Verwertung gebrauchter Katalysatoren**

(71) Anmelder: SIEMENS AKTIENGESELLSCHAFT, 80333 München (DE)
(72) Erfinder: Witzel, Frank, Dr., 96215 Lichtenfels (DE); Fischer, Stefan, Dr., 96215 Lichtenfels (DE); Pajonk, Günther, Dr., 96199 Zapfendorf (DE)

(57) **Zusammenfassung**

Gebrauchte Katalysatoren (12) werden in gemahlener Form unter Ausnutzung ihrer Restaktivität zum Abbau von Dioxinen und/oder Furanen dem Abgas einer technischen Anlage beigemengt, dem Abgas wieder entnommen und in eine Schlacke (26) eingebunden. Auf diese Weise wird eine kostengünstige und effektive Verwertung sowie eine sichere Entsorgung gebrauchter Katalysatoren erzielt.

## Beschreibung

Die Erfindung betrifft ein Verfahren zur Verwertung gebrauchter Katalysatoren unter Ausnutzung ihrer Restaktivität.

Katalysatoren werden eingesetzt, um beispielsweise die in einem Abgas einer technischen Anlage enthaltenen Schadstoffe, wie beispielsweise Stickoxide, Kohlenmonoxid, Kohlenwasserstoffe oder halogenierte organische Verbindungen wie Dioxine und Furane in unschädliche Substanzen umzuwandeln. Auf diese Weise können vorgegebene Emissionswerte für die genannten Schadstoffe eingehalten werden.

Eine technische Anlage, welche die genannten Schadstoffe in nicht unerheblicher Menge emittiert, ist beispielsweise ein Fossilkraftwerk, eine Müllverbrennungsanlage, aber auch ein Verbrennungsmotor. Insbesondere enthält das Abgas einer Sinteranlage, in welcher feinkörniges Metallerz oder feinkörniger Metallabrieb der metallverarbeitenden Industrie durch Sintern stückig und damit der Verhüttung zugänglich gemacht wird, in nicht unerheblichem Umfang die genannten halogenierten organischen Verbindungen wie Dioxine und Furane.

Katalysatoren zur Reinigung eines Abgases sind in der Regel aus Metallen, Metalloxiden und/oder Keramik aufgebaut. Insbesondere sind derartige Katalysatoren meist als vom Abgas durchströmbare Formkörper ausgebildet, welche in den Abgaskanal einer technischen Anlage eingesetzt werden. Beispielhaft sei hierfür ein platten- oder wabenförmiger DeNOx-Katalysator genannt, welcher auf der Basis von Titandioxid aufgebaut ist und zusätzlich Beimengungen an Wolframtrioxid, Molybdäntrioxid und Vanadiumpentoxid enthält. Ein derartiger Katalysator reduziert mit Hilfe eines geeigneten Reduktionsmittels, meist Ammoniak, die im Abgas enthaltenen Stickoxide zu molekularem Stickstoff. Seine spezifische Oberfläche beträgt hierbei zwischen 20 und 150 m²/g.

Auf der Oberfläche derartiger im Abgas angeordneter Katalysatoren treten nach einer gewissen Einsatzdauer Ablagerungen auf, welche aus im Abgas enthaltenen Staubpartikeln sowie aus ursprünglich gasförmigen, auf der Oberfläche adsorbierten Substanzen bestehen. Infolge derartiger Ablagerungen wird die katalytische Aktivität der Katalysatoren verringert und der Strömungswiderstand für das durchströmende Abgas erhöht. Nach einer gewissen Zeit werden dadurch die Katalysatoren für ihren eigentlichen Einsatz unbrauchbar und müssen ausgetauscht werden.

Eine Entsorgungsmöglichkeit gebrauchter Katalysatoren ist die Wiederaufbereitung. Eine Wiederaufbereitung gebrauchter Katalysatoren durch Abreinigen der Ablagerungen ist jedoch nicht in jedem Fall möglich, z.B. dann nicht, wenn die Ablagerungen fest an der Katalysatoroberfläche haften. Da die gebrauchten Katalysatoren zudem häufig mit Schwermetallen beladen sind, müssen sie kostenintensiv durch Endlagerung auf einer Deponie entsorgt werden.

Eine weitere Entsorgungsmöglichkeit stellt die Einbindung der gebrauchten Katalysatoren in die Schlacke der Feuerung eines Fossilkraftwerks dar, die, zu einem Granulat weiterverarbeitet, ein begehrtes Schuttgut der Bauindustrie darstellt. Die den Katalysatoren anhaftenden Schwermetalle sind dabei wasserunlöslich in das Granulat eingebunden.

Hierzu ist es aus der EP 0 324 454 B bekannt, die Katalysatoren aufzumahlen und zusammen mit Flugstaub der Schmelzkammer eines Fossilkraftwerks zuzuführen. Die mit einem Teil des Katalysatormaterials versetzte Schlacke wird aus der Schmelzkammer abgezogen und zu Granulat verarbeitet. Gleichzeitig werden eventuell dem Katalysatormaterial noch anhaftende Schadstoffe wie Dioxine oder Furane durch die hohen Temperaturen in der Schmelzkammer thermisch zersetzt.

Des weiteren ist es aus der DE 195 34 558 C1 bekannt, Titandioxid-haltige DeNOx-Katalysatoren aufzumahlen und zusammen mit der Kohle der Feuerung eines Kohlekraftwerks zuzuführen. Neben der sicheren Entsorgung der Katalysatoren wird durch das enthaltende Titandioxid ein verbesserter Ausbrand der Kohle erzielt. Auf diese Weise werden die Katalysatoren nicht nur entsorgt, sondern gleichzeitig auch verwertet. Durch eine Verwertung wird eine gewinnbringende Entsorgung gebrauchter Katalysatoren möglich, so daß an weiteren Verfahren zur Verwertung gebrauchter Katalysatoren ein dringender Bedarf besteht.

Aufgabe der Erfindung ist es, ein solches Verfahren zur Verwertung gebrauchter Katalysatoren anzugeben, welches gleichzeitig eine sichere und kostengünstige Entsorgung der Katalysatoren erlaubt.

Diese Aufgabe wird erfindungsgemäß gelöst durch ein Verfahren zur Verwertung gebrauchter Katalysatoren, wobei die Katalysatoren in aufgemahlener Form unter Ausnutzung der Restaktivität zum Abbau von Dioxinen und/oder Furanen dem Abgas einer technischen Anlage, insbesondere einer Müllverbrennungsanlage oder einer Sinteranlage, beigemengt und anschließend dem Abgas, gegebenenfalls mit Flugstaub versetzt, wieder entnommen und in eine Schlacke eingebunden werden. Dabei werden im Abgas enthaltene Dioxine und/oder Furane auf den aufgemahlenen Katalysatoren adsorbiert und katalytisch zersetzt.

Dioxine und/oder Furane entstehen durch unvollständige Verbrennung und/oder werden durch die sogenannte De-Novo-Synthese bei Vorhandensein von organischen Kohlenstoffverbindungen, Alkali- oder Erdalkalichloriden sowie als Katalysatoren wirkenden Metallverbindungen beim Abkühlen im Abgas einer technischen Verbrennungsanlage neu gebildet.

Um in einer technischen Anlage wie einer Müllverbrennungsanlage oder einem Fossilkraftwerk die Emissionswerte für Dioxine und/oder Furane einhalten zu können, werden im Niedertemperaturbereich, d.h. bei Temperaturen unterhalb von 250 °C, dem Abgas Adsorptionsmittel beigegeben und an einem nachgeschalteten Elektro- oder Gewebefilter wieder entnommen. Die Dioxine und/oder Furane werden dabei durch Adsorption dem Abgas entzogen. Die beladenen Adsorptionsmittel werden entweder auf einer Deponie endgelagert oder in eine Schlacke eingebunden.

Insbesondere wird dem Abgas zur Adsorption eine Mischung aus Kalziumhydroxid oder Kalziumcarbonat und Kohle in Form von Herdofenkoks oder Aktivkohle beigegeben. Dabei wirkt die Kohle als eigentliches Adsorptionsmittel für die Dioxine und/oder Furane, wohingegen das Kalziumhydroxid oder Kalziumcarbonat unter anderem eine Selbstentzündung der Kohle im Abgas verhindert. Dies ist aus W. Weiss: "Minderung der PCDD/PCDF-Emissionen an einer Eisenerzsinteranlage", VDI-Berichte Nr. 1298, (1996), Seiten 249 ff, bekannt.

Die Erfindung geht nun von der Überlegung aus, daß sich gebrauchte Katalysatoren aufgrund ihrer hohen spezifischen Oberfläche von 10 bis 100 m²/g in aufgemahlener Form ebenfalls als ein Adsorptionsmittel für Dioxine und/oder Furane eignen. Aufgrund der katalytischen Restaktivität der gebrauchten Katalysatoren können die adsorbierten Dioxine und/oder Furane katalytisch zersetzt werden. Dies hat den großen Vorteil, daß sich die Adsorptionsfähigkeit der aufgemahlenen Katalysatoren oder des aufgemahlenen Katalysatormaterials nur sehr langsam erschöpft, da die adsorbierten Dioxine und/oder Furane in Substanzen wie Halogenwasserstoff, Kohlendioxid oder Wasser zerlegt werden, die in das umgebende Abgas desorbieren. Gemahlenes Katalysatormaterial hat demnach durch die noch vorhandene katalytische Restaktivität als Adsorptionsmittel eine wesentlich höhere Lebensdauer als ein herkömmliches Adsorptionsmittel, wie z.B. Kohle. Das Katalysatormaterial kann daher mehrfach dem Abgas entnommen und erneut eingesetzt werden. Als gebrauchte Katalysatoren eignen sich prinzipiell alle Katalysatoren, welche aufgrund ihrer Materialzusammensetzung eine Oxidationsaktivität erwarten lassen.

Bevorzugt werden die Katalysatoren zu einem feinen Pulver aufgemahlen und in das Abgas eingeblasen. Die Entnahme der eingebrachten gemahlenen Katalysatoren kann durch einen nachgeschalteten Elektro- oder Gewebefilter geschehen. Zur Entsorgung des derart verwendeten Katalysatormaterials werden die gegebenenfalls mit Flugstaub des Abgases versetzten, gemahlenen Katalysatoren in bekannter Weise in eine Schlacke, wie sie z.B. in einem Aluminium-Schmelzofen oder einem Hochofen zur Eisenerzverhüttung vorkommt, eingebunden. Diese Einbindung kann auch durch Einbringen in die Schmelzkammer eines Fossilkraftwerkes geschehen. Dabei sind die herrschenden Temperaturen von größer als 1000 °C ausreichend zur thermischen Zersetzung der Dioxine und/oder Furane.

In vorteilhafter Ausgestaltung der Erfindung werden die Katalysatoren in aufgemahlener Form in das Abgas pneumatisch eingeblasen. Auf diese Weise wird eine gute Verteilung des Katalysatormaterials in dem Abgas erzielt, was zu einer hohen Abscheidung der in dem Abgas vorhandenen Dioxine und/oder Furane führt.

Alternativ läßt sich das Katalysatormaterial in dem Abgas gut verteilen, wenn aus den aufgemahlenen Katalysatoren mit Hilfe eines Lösungsmittels, wie z.B. Wasser, eine Suspension hergestellt und diese in das Abgas eingedüst wird, wobei das Lösungsmittel aufgrund der auch im Niedertemperaturbereich noch verhältnismäßig hohen Temperatur des Abgases verdampft.

Die Katalysatoren können vorteilhafterweise dem Abgas zusammen mit Kohle, Kalziumhydroxid (Ca(OH)₂) und/oder Kalziumcarbonat (CaCO₃) beigemengt werden. Durch den katalytischen Abbau der Dioxine und/oder Furane ist die Adsorptionsfähigkeit der Kohle, welche vorzugsweise in Form von Herdofenkoks oder Aktivkohle beigegeben wird, weniger schnell erschöpft. Daneben wirkt auch das Katalysatormaterial einer Selbstentzündung der Kohle entgegen, so daß auf derartige vergleichsweise teuere Zuschlagstoffe wie Kalziumhydroxid und/oder Kalziumcarbonat auch gänzlich verzichtet werden kann.

Selbstverständlich kann anstelle von Kohle als Adsorbermaterial auch aufgemahlener Zeolith eingesetzt werden, welcher jedoch im Vergleich zu Kohle wesentlich teurer ist.

In einer weiteren vorteilhafter Ausgestaltung der Erfindung wird die Kohle und/oder das Kalziumhydroxid und/oder das Kalziumcarbonat gemeinsam mit den Katalysatoren zu einer Suspension verarbeitet und diese in das Abgas eingedüst. Auf diese Weise wird ein innig verbundenes Adsorptionsmaterial geschaffen, welches zusätzlich zum Abbau von Dioxinen und/oder Furanen katalytisch aktiv ist.

Die katalytische Aktivität des Katalysatormaterials ist besonders günstig zum Abbau von Dioxinen und/oder Furanen, wenn die gebrauchten Katalysatoren oxidische Katalysatoren aus einem Oxid oder einer Mischung von Oxiden der Übergangsmetalle, Lanthaniden, Aktiniden, Alkalimetalle, Erdalkalimetalle, sowie Aluminium oder Silizium sind. Insbesondere sind natürlich gebrauchte Dioxin-Katalysatoren aber auch gebrauchte DeNOx-Katalysatoren besonders günstig für das Verwertungsverfahren. Derartige Katalysatoren bestehen in der Hauptsache aus Titandioxid mit Beimengungen Übergangsmetalloxiden sowie Spuren von Siliziumoxid und Aluminiumoxid.

In weiterer vorteilhafter Ausgestaltung der Erfindung werden die dem Abgas entnommenen Katalysatoren dem Abgas erneut beigegeben, bis die Restaktivität erschöpft ist und erst danach in die Schlacke eingebunden. Eine solche Rezirkulation des Katalysatormaterials kann beispielsweise mit Hilfe eines Wirbelbettreaktors geschehen. Dabei wird der Wirbelbettreaktor mit den gemahlenen Katalysatoren versetzt, wodurch eine sehr gute Vermischung der Katalysatoren mit dem den Wirbelbettreaktor durchströmenden Abgas erzielt wird. Das beispielsweise mit einem dem Wirbelbettreaktor nachgeschaltetem Gewebefilter entnommene Katalysatormaterial wird dann in einfacher Weise wieder dem Wirbelbettreaktor selbst zugeführt.

Die Erfindung bietet den Vorteil, daß durch den teilweisen oder gänzlichen Ersatz der bislang zum Niedertemperaturabbau von Dioxinen und/oder Furanen verwendeten Adsorptionsmaterialien wie Kohle oder Zeolith oder durch den Ersatz des als Entzündungshemmers eingesetzten Kalziumhydroxids oder Kalziumcarbonats durch gebrauchte, aufgemahlene Katalysatoren die Niedertemperaturminderung von Dioxinen und/oder Furanen im Abgas einer technischen Anlage wesentlich günstiger und effektiver wird, als es bislang der Fall gewesen ist. Gleichzeitig bietet die Erfindung eine effektive Verwertung gebrauchter Katalysatoren und deren sichere Entsorgung.

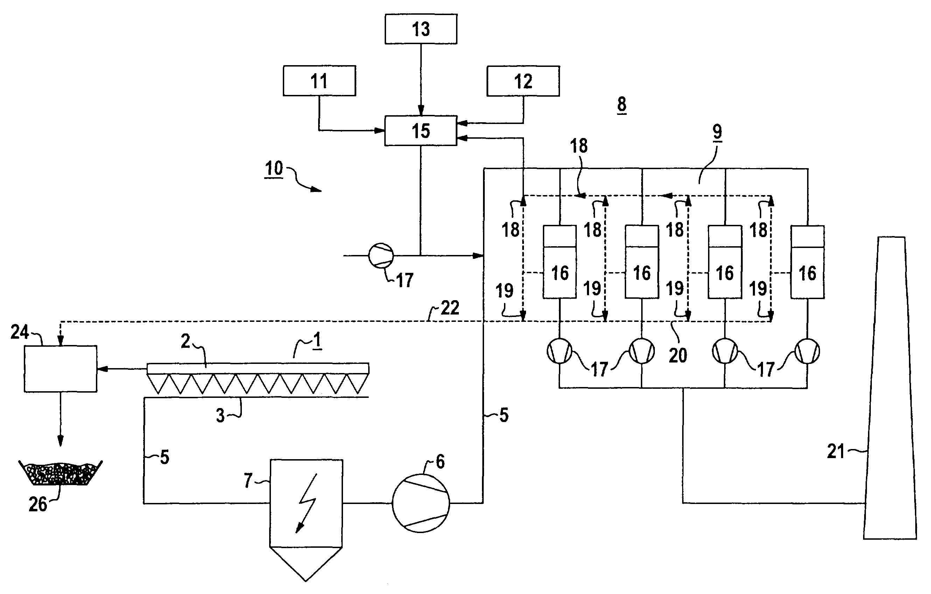

Ein Ausführungsbeispiel der Erfindung wird anhand einer Zeichnung näher erläutert. Dabei zeigt die Zeichnung eine Sinteranlage mit einem an die Abgasleitung angeschlossenen Reinigungssystem zur Niedertemperaturminderung von Dioxinen und/oder Furanen.

In der Zeichnung ist eine Sinteranlage 1 mit einem Sinterband 2 und einer Abgasabsaugung 3 dargestellt. Das in der Abgasabsaugung 3 gesammelte Abgas der Sinteranlage 1 wird in eine Abgasleitung 5 geleitet. Hierzu erzeugt ein Sauggebläse 6 den erforderlichen Unterdruck. Zur Staubabscheidung aus dem Abgas ist hierbei ein Elektrofilter 7 in der Abgasleitung 5 angeordnet.

Im Anschluß an den Elektrofilter 7 ist in der Abzugsleitung 5 ein Reinigungssystem 8 zur Niedertemperaturminderung der im Abgas enthaltenen Dioxine und/oder Furane angeordnet. Das Reinigungssystem 8 umfaßt dabei eine Filteranlage 9 zur Entnahme und eine Einbringvorrichtung 10 zur Zugabe von gebrauchtem, gemahlenem Katalysator in das Abgas. Dabei wird dem der Filteranlage 9 zuströmenden Abgas eine Mischung aus Aktivkohle 11 und gemahlenem Katalysator 12 zugegeben. Die gemahlenen Katalysatoren 12 sind gebrauchte DeNOx- und Dioxin-Katalysatoren auf Titanoxid-Basis. Die Katalysatoren 12 werden zusammen mit der Aktivkohle 11 mit dem Lösungsmittel 13, Wasser, zu einer Suspension 15 verarbeitet und mittels eines Verdichters 17 pneumatisch in das Abgas eingedüst. Das Lösungsmittel 13 verdampft dabei. Das befrachtete Abgas durchströmt anschließend die Filteranlage 9, welche eine Anzahl von parallel angeordnete Gewebefiltern 16 mit daran angeschlossenen Sauggebläsen 17 umfaßt. In diesen Gewebefiltern 16, welche aus einer Reihe von Filterschläuchen bestehen, wird das zugegebene Material (11, 12) als Filterstaub abgeschieden. Der Filterstaub wird dann teilweise - angedeutet durch die Pfeile 18 - wieder der Suspension 15 beigegeben und erneut dem Abgas zugeführt und teilweise - angedeutet durch die Pfeile 19 - dem Reinigungsprozeß mittels einer Filterstaubentnahme 20 entzogen. Die Entnahme mittels der Filterstaubentnahme 20 geschieht dabei entweder kontinuierlich oder im off-line-Betrieb der Sinteranlage 1. Das das Reinigungssystem 8 verlassende Reingas wird schließlich über einen Kamin 21 in die Umgebung geleitet.

Das der Filteranlage 9 gemeinsam mit Flugstaub und Aktivkohle 11 entnommene Katalysatormaterial 12 wird über eine Rückführleitung 22 einem Hochofen 24 zur Eisenerzverhüttung zugeführt, wodurch die Katalysatoren 12 sicher und wasserunlöslich in der Schlacke 26 des Hochofens 24 eingebunden wird.

## Patentansprüche

1. Verfahren zur Verwertung gebrauchter Katalysatoren (12), wobei die Katalysatoren (12) in aufgemahlener Form dem Abgas einer technischen Anlage, insbesondere einer Müllverbrennungsanlage oder einer Sinteranlage (1), beigemengt werden, wobei im Abgas enthaltene Dioxine und/oder Furane auf den aufgemahlenen Katalysatoren (12) adsorbieren und katalytisch zersetzt werden, und wobei die aufgemahlenen Katalysatoren (12) anschließend dem Abgas, gegebenenfalls mit Flugstaub versetzt, wieder entnommen und in eine Schlacke (26) eingebunden werden.

2. Verfahren nach Anspruch 1,
**dadurch gekennzeichnet**, daß die Katalysatoren (12) dem Abgas bei Temperaturen von weniger als 250 °C beigemengt werden.

3. Verfahren nach Anspruch 1 oder 2,
**dadurch gekennzeichnet**, daß die aufgemahlenen Katalysatoren (12) in das Abgas pneumatisch eingeblasen werden.

4. Verfahren nach Anspruch 1 oder 2,
**dadurch gekennzeichnet**, daß aus den aufgemahlenen Katalysatoren (12) mit Hilfe eines Lösungsmittels (13) eine Suspension (15) hergestellt und diese in das Abgas eingedüst wird, wobei das Lösungsmittel (13) verdampft.

5. Verfahren nach einem der Ansprüche 1 bis 4,
**dadurch gekennzeichnet**, daß die aufgemahlenen Katalysatoren (12) dem Abgas zusammen mit Kohle und/oder (11), Kalziumhydroxid (Ca(OH)₂) und/oder Kalziumcarbonat (CaCO₃) beigemengt werden.

6. Verfahren nach Anspruch 5,
**dadurch gekennzeichnet**, daß die Kohle und/oder (11), das Kalziumhydroxid und/oder das Kalziumcarbonat gemeinsam mit den aufgemahlenen Katalysatoren (12) zu einer Suspension (15) verarbeitet werden, welche in das Abgas eingedüst wird.

7. Verfahren nach einem der Ansprüche 1 bis 6,
**dadurch gekennzeichnet**, daß die Katalysatoren (12) oxidische Katalysatoren aus einem Oxid oder einer Mischung von Oxiden der Übergangsmetalle, Lanthaniden, Actiniden, Alkalimetalle, Erdalkalimetalle, sowie Aluminum oder Silizium sind.

8. Verfahren nach Anspruch 7,
**dadurch gekennzeichnet**, daß die oxidischen Katalysatoren DeNOx-Katalysatoren und/oder Dioxin-Katalysatoren sind.

9. Verfahren nach einem der Ansprüche 1 bis 8,
**dadurch gekennzeichnet**, daß die dem Abgas entnommenen aufgemahlenen Katalysatoren (12) dem Abgas erneut beigegeben werden, bis ihre katalytische Restaktivität erschöpft ist, und danach in die Schlacke (26) eingebunden werden.
